# EUROPEAN PATENT SPECIFICATION

(11) **EP 1 867 874 B1**
(45) Date of publication and mention of the grant of the patent: **13.03.2013**
(21) Application number: 06730987.2
(22) Date of filing: 03.04.2006
(51) Int. Cl.: F04B 39/00, F04C 29/00, H02K 5/22, H01R 13/52

(54) **ELECTRIC MOTOR-DRIVEN COMPRESSOR**
ELEKTROMOTORGETRIEBENER VERDICHTER
COMPRESSEUR ENTRAINE PAR UN MOTEUR ELECTRIQUE

(30) Priority: 04.04.2005 JP 2005107352
(43) Date of publication of application: 19.12.2007
(73) Proprietor: Sanden Corporation, Isesaki-shi, Gunma 372-8502 (JP)
(72) Inventor: KITANO, Norio, Sanden Corporation, Isesaki-shi, Gunma 372-8502 (JP)
(74) Representative: Hofer, Dorothea
(86) International application number: PCT/JP2006/307039
(87) International publication number: WO 2006/107015

(56) References cited:
- JP-A- 08 168 145
- JP-A- 58 048 444
- JP-A- 58 107 039
- JP-A- 2003 239 862
- US-A- 4 990 106
- US-A1- 2003 156 954

## Description

### Technical Field of the Invention

The present invention relates to an electric motor-driven compressor, and specifically, to an electric motor-driven compressor having an improved connector structure for an external terminal for power supply to an incorporated electric motor for driving a compression mechanism.

### Background Art of the Invention

In an electric motor-driven compressor in which an electric motor for driving a compression mechanism is incorporated, in particular, in an electric motor-driven compressor used in a refrigeration system for vehicles, etc., because usually a high-voltage motor is used, a connector structure having no fear of leak is required for safety by ensuring a gas tightness in a casing which covers an external terminal portion for power supply to the motor and a terminal connecting portion connected to the external terminal.

A terminal connecting portion of a connector is connected to the above-described external terminal for power supply. As the structure for such a connector, a structure depicted in Figs. 7 and 8 is known from JP-A-2003-239862, which discloses a compressor according to the preamble of claim 1. Connector 100 has a terminal connecting portion 103 having terminal holes 102 into which external terminals for power supply 101 are inserted. Terminal connecting portion 103 is covered with a casing 104. A cable 105 is connected to terminal connecting portion 103. Cable 105 is fixed by fixing ring 106. Cable 105 comprises a core wire 112 and a covering material 113 for covering the core wire 112, and in order to ensure the insulation performance, the covering material 113 is usually formed from a resin (for example, a thermoplastic resin).

Further, attachment portions 108 are provided to casing 104. An insertion hole 109 is provided to each attachment portion 108 for being inserted with a bolt (not shown). On the other hand, a screw hole 111 screwed with a bolt is provided to a compressor housing 110 of a compressor (not shown). Connector 100 is connected by inserting external terminal 101 into terminal hole 102, inserting bolts into insertion holes 109 of attachment portions 108 and screwing the bolts to screw holes 111.

In the above-described condition where connector 100 is connected to external terminals 101 for power supply, it is required to ensure the gas tightness between the inside of - casing 104 and the atmosphere side. Therefore, a sealing material 107 is provided in the insertion portion of cable 105 into casing 104.

However, in a case where the whole of connector 100 becomes a high-temperature condition under an environment such as in an engine compartment of a vehicle, the resin covering material 113 covering core wire 112 may be softened, the contact pressure between cable 105 and sealing material 107 may be decreased, and the sealing performance of the sealing material 107 may be reduced. Further, when the space for installing the compressor is small (for example, an engine compartment of a vehicle, etc.), there is a case where cable 105 must be disposed in a bent fashion, and even in such a case, the contact area between cable 105 and sealing material 107 may be decreased, and the sealing performance of the sealing material 107 may be reduced.

### Disclosure of the Invention

### Problems to be solved by the Invention

Accordingly, an object of the present invention is to provide an electric motor-driven compressor excellent in reliability and durability, in which even in a case where a cable becomes high temperature or even in a case where a cable is disposed in a vent fashion, the contact pressure or the contact area between the cable and a sealing material can be prevented from being reduced, thereby ensuring a good sealing performance in a casing.

### Means for solving the Problems

To achieve the above object, an electric motor-driven compressor according to the present invention has a connector structure comprising a cable for power supply in which a core wire is covered with a covering material, a terminal connecting portion to which the cable is connected and which has a terminal hole, into which an external terminal for power supply to an electric motor for driving a compression mechanism incorporated in a compressor housing is inserted, and which is structured to be attached to and detached from the external terminal, and a casing covering the terminal connecting portion, and the electric motor-driven compressor is characterized in that a collar is provided between the core wire and the covering material of the cable at at least a position corresponding to a position of a sealing material provided at a cable inserting portion of the casing. In such a structure, since the collar is provided inside the covering material of the cable at at least a position corresponding to the position of the sealing material provided at the cable inserting portion of the casing, even in a case where the cable becomes high temperature in an engine compartment, etc. and the resin covering material of the cable is softened, or even in a case where the cable is disposed in a vent fashion, the contact pressure or the contact area between the cable and the sealing material may be always maintained to be constant. Therefore, a good sealing performance in the casing can be ensured.

It is possible that a flange radially projecting is provided to the collar at an end portion of the collar. By providing such a flange, because the whole of the collar can be fixed to the casing via the flange, a shift in position, etc. can be surely prevented.

The collar may be made from, for example, a metal or a resin. As the resin, both of a thermoplastic resin and a thermosetting resin can be used. Where, the temperature of the core wire of the cable is also affected by a temperature in a place installed with the electric motor-driven compressor and the like. Therefore, it is preferred that the material of the collar is decided also in consideration of the place installed with the electric motor-driven compressor, etc.

The electric motor-driven compressor according to the present invention can be applied to any type of electric motor-driven compressor as long as an electric motor is incorporated thereinto, and can be applied to a so-called hybrid compressor. For example, the present invention can be applied to a hybrid compressor wherein the electric motor-driven compressor is formed by integrally incorporating together a first compression mechanism driven only by a first drive source different from the above-described incorporated electric motor and a second compression mechanism driven only by the above-described incorporated electric motor provided as a second drive source.

In such a hybrid compressor, for example, a structure may be employed wherein the above-described first and second compression mechanisms are formed as scroll type compression mechanisms and the fixed scrolls of both compression mechanisms are disposed back to back. Further, these fixed scrolls of both compression mechanisms disposed back to back may be formed as an integrally formed fixed scroll member. Furthermore, as the above-described first drive source, a drive source for running a vehicle, for example, an engine for running a vehicle or an electric motor different from the above-described incorporated electric motor, can be used.

### Effect according to the Invention

In the electric motor-driven compressor according to the present invention, since the collar is provided inside the covering material of the cable at at least a position corresponding to the position of the sealing material provided at the cable inserting portion of the casing, even in a case where the cable becomes high temperature at the time of power supply, etc. and the resin covering material of the cable is softened, or even in a case where the cable is disposed in a vent fashion, the contact pressure or the contact area between the cable and the sealing material can be always maintained to be constant. Therefore, a good sealing performance in the casing can be ensured, and the reliability and the durability of the electric motor-driven compressor can be improved.

### Brief explanation of the drawings

[Fig. 1] Fig. 1 is a vertical sectional view of a hybrid compressor as an electric motor-driven compressor according to a first embodiment of the present invention.
[Fig. 2] Fig. 2 is a cross-sectional view of a connector depicted in Fig. 1.
[Fig. 3] Fig. 3 is an exploded sectional view showing a connection state of a connector to the hybrid compressor depicted in Fig. 1.
[Fig. 4] Fig. 4 is a partial, cross-sectional view of a connector structure according to a second embodiment of the present invention.
[Fig. 5] Fig. 5 is a plan view of a collar depicted in Fig. 4.
[Fig. 6] Fig. 6 is a plan view of a collar according to an embodiment different from the collar depicted in Fig. 5.
[Fig. 7] Fig. 7 is a cross-sectional view of a conventional connector.
[Fig. 8] Fig. 8 is an exploded sectional view showing a connection state of the connector depicted in Fig. 7 to a compressor.

### Explanation of symbols

1: hybrid compressor as an electric motor-driven compressor
2: first compression mechanism
3: second compression mechanism
10, 30: fixed scroll
11, 31: movable scroll
12, 32: operational space
13, 33: drive shaft
15: electromagnetic clutch
18: suction port
20, 40: suction chamber
21, 41: discharge hole
22, 42: discharge path
35: electric motor
36: rotor
37: stator
38: stator housing
39: communication path
43: fixed scroll member
50: terminal portion
51: external terminal for power supply
52: wire from a stator
53: connecting portion
54: hollow projecting portion
55: lid
56, 70: connector
57: terminal hole
58: terminal connecting portion
59, 74: casing
60, 71: cable
61: fixing ring
62, 72: core wire
63, 73: covering material
64: attachment portion
65: insertion hole
66: screw hole
67, 75: sealing material
68, 76: collar
77: cylindrical portion
78: flange
79: screw
80, 82: screw hole
81: fixing portion
83: lid

### The Best mode for carrying out the Invention

Hereinafter, desirable embodiments of electric motor-driven compressors according to the present invention will be explained referring to figures.

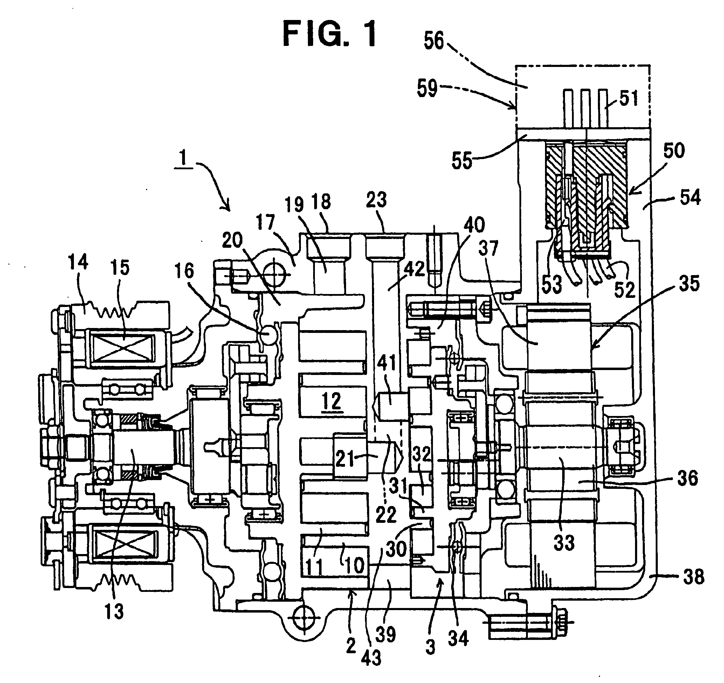

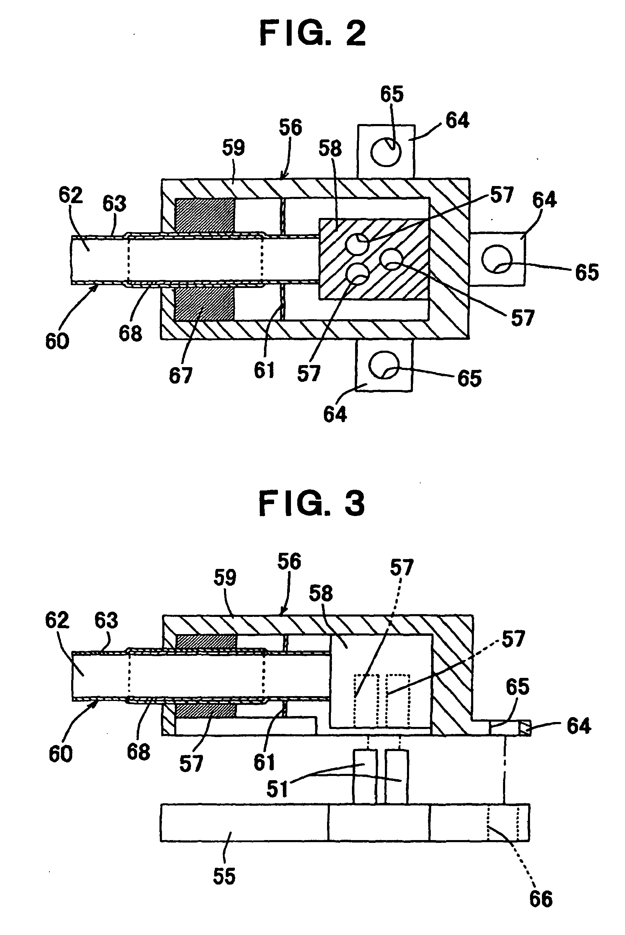

Fig. 1 depicts an electric motor-driven compressor according to a first embodiment of the present invention, particularly, depicts a case of a hybrid compressor. Figs. 2 and 3 show a connector structure forming a part of the hybrid compressor depicted in Fig. 1, and this structure shown in Figs. 2 and 3 is not limited to the application to the hybrid compressor but can be applied to an electric motor-driven compressor merely having only an electric motor as its drive source.

First, the hybrid compressor depicted in Fig. 1 will be explained. Hybrid compressor 1 is formed as a scroll type compressor, and has a first compression mechanism 2 and a second compression mechanism 3. First compression mechanism 2 has a fixed scroll 10, a movable scroll 11 forming a plurality of pairs of operational spaces (fluid pockets) 12 by engaging with fixed scroll 10, a drive shaft 13 driving movable scroll 11 at an orbital movement by engaging with movable scroll 11, an electromagnetic clutch 15 for an on-off operation of the transmission of a driving force between a pulley 14, to which the driving force from a drive source for running a vehicle (not shown) provided as a first drive source is transmitted, and the drive shaft 13, a ball coupling 16 for preventing the rotation of movable scroll 11, and a suction port 18 formed on a casing 17. The fluid to be compressed (for example, refrigerant gas) sucked from suction port 18 into a suction chamber 20 through a suction path 19 is taken into operational spaces 12, the operational spaces 12 are moved toward the center of fixed scroll 10 while the volumes of the operational spaces 12 are decreased, and by this operation, the refrigerant gas in the operational spaces 12 is compressed. A discharge hole 21 is formed on the central portion of fixed scroll 10, and the compressed refrigerant gas is discharged to a high-pressure side of an external refrigerant circuit through the discharge hole 21, a discharge path 22 and a discharge port 23.

On the other hand, second compression mechanism 3 has a fixed scroll 30, a movable scroll 31 forming a plurality of pairs of operational spaces (fluid pockets) 32 by engaging with fixed scroll 30, a drive shaft 33 driving movable scroll 31 at an orbital movement by engaging with movable scroll 31, and a ball coupling 34 for preventing the rotation of movable scroll 31. An electric motor 35 is incorporated in order to drive the drive shaft 33 of this second compression mechanism 3. Electric motor 35 has a rotor 36 fixed to drive shaft 33 and a stator 37, the stator 37 is fixed to a stator housing 38 or a stator housing 38 which is formed as a part of the compressor housing, and the whole of electric motor 35 is contained in the stator housing 38. In this second compression mechanism 3, the fluid to be compressed (for example, refrigerant gas) sucked from suction port 18 into suction chamber 20 of first compression mechanism 2 is sucked into a suction chamber 40 of second compression mechanism 3 through a communication path 39, the gas is taken into operational spaces 32, the operational spaces 32 are moved toward the center of fixed scroll 30 while the volumes of the operational spaces 32 are decreased, and by this operation, the refrigerant gas in the operational spaces 32 is compressed. A discharge hole 41 is formed on the central portion of fixed scroll 30, and the compressed refrigerant gas is discharged to the high-pressure side of the external refrigerant circuit through the discharge hole 41 and a discharge path 42.

In this embodiment, fixed scroll 10 of first compression mechanism 2 and fixed scroll 30 of second compression mechanism 3 are disposed back to back, and both fixed scrolls 10 and 30 are formed as an integrated fixed scroll member 43.

When only first compression mechanism 2 of hybrid compressor 1 is operated, an electricity is not supplied to electric motor 35 for driving second compression mechanism 3, and the electric motor 35 is not rotated. Therefore, second compression mechanism 3 does not operate. When the hybrid compressor 1 is driven only by electric motor 35, the electric motor 35 is turned to be on and rotated, the rotation of the electric motor 35 is transmitted to drive shaft 33 of second compression mechanism 3, and the orbital movement of movable scroll 31 is performed by the drive shaft 33. At that time, electromagnetic clutch 15 of first compression mechanism 2 is not excited, and the rotation of the drive source for running a vehicle as a first drive source is not transmitted to the first compression mechanism 2. Therefore, first compression mechanism 2 does not operate. When both first and second compression mechanisms 2 and 3 are driven simultaneously, the driving force from the drive source for running a vehicle is transmitted to movable scroll 11 of first compression mechanism 2 as well as electric motor 35 is turned to be on and the driving force thereof is transmitted to movable scroll 31 of second compression mechanism 3.

In hybrid compressor 1 thus constructed, terminal portion 50 of electric motor 35 is disposed at an upper portion of the hybrid compressor 1 which is in a mounted condition. In the detailed structure of this terminal portion 50, external terminals for power supply 51 of electric motor 35 and connecting portions 53 connected to the end portions of wires 52 from stator 37 of electric motor 35 are provided. Connecting portions 53 are disposed in a hollow projecting portion 54 which is formed on stator housing 38 and extends toward outside, and external terminals for power supply 51 are attached to a lid 55 which substantially can close this hollow projecting portion 54.

As depicted in Figs. 2 and 3, a connector 56 is connected to external terminals for power supply 51. Connector 56 has a terminal connecting portion 58 provided with terminal holes 57 into which external terminals for power supply 51 are inserted. Terminal connecting portion 58 is covered with a casing 59. A cable 60 is connected to terminal connecting portion 58. Cable 60 is fixed to casing 59 via a fixing ring 61. Cable 60 comprises a core wire 62 and a covering material 63 covering the core wire 62, and the covering material 63 is formed from a resin in order to ensure an insulation performance.

A sealing material 67, which is formed from, for example, a rubber or a resin, is provided to the cable inserting portion of casing 59. By this sealing material 67, the inside of casing 59 is sealed at a gas-tight condition relative to outside. A collar 68 made from a metal is provided in cable 60 at at least a position corresponding to the position of sealing material 67. Although collar 68 is made from a metal in this embodiment, it is possible to form it from a resin. Collar 68 is formed as a cylindrical form as shown in Figs. 2 and 3, and it is provided inside covering material 63 of cable 60.

Further, an attachment portion 64 is provided to casing 59 for fixing the casing 59 to the compressor housing side. On this attachment portion 64, insertion holes 65 are provided for inserting bolts (not shown) thereinto. On the other hand, screw holes 66 for being screwed with the bolts are provided to lid 55 of compressor 1 side. External terminals for power supply 51 are inserted into terminal holes 57, the bolts are inserted into insertion holes 65 of attachment portion 64, the bolts are screwed into screw holes 66, and thus, connector 56 is connected.

In this embodiment, since collar 68 is provided in cable 60 at at least a position corresponding to the position of sealing material 67, even in a case where cable 60 becomes high temperature and resin covering material 63 of cable 60 is softened, or even in a case where cable 60 is disposed in a vent fashion, the contact pressure or the contact area between cable 60 and sealing material 67 can be always maintained to be constant. Therefore, a good sealing performance in casing 59 can be ensured.

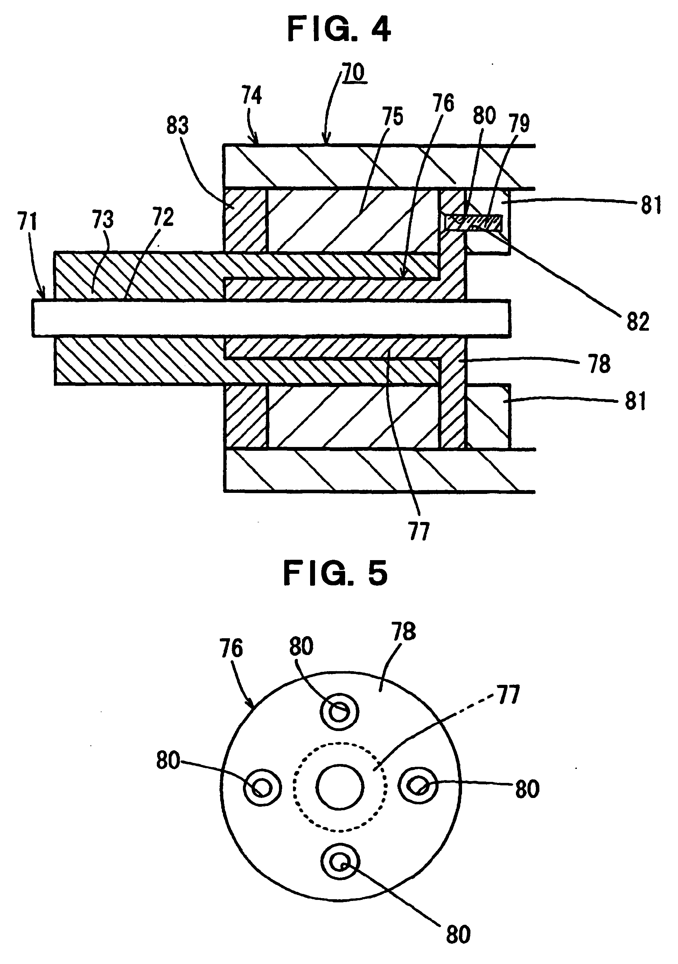

Fig. 4 depicts a connector 70 forming a part of an electric motor-driven compressor according to a second embodiment of the present invention. Cable 71 comprises a core wire 72 and a covering material 73 covering the core wire 72, and the covering material 73 is formed from a resin in order to ensure the insulation performance.

A sealing material 73, which is formed from, for example, a rubber or a resin, is provided to the cable inserting portion of casing 74. The cable inserting portion of casing 74 is closed by a lid 83. Further, the inside of casing 74 is sealed at a gas-tight condition relative to outside, by a sealing material 75. A collar 76 made from a metal is provided inside the covering material of cable 71 at at least a position corresponding to the position of sealing material 75. Although collar 76 is made from a metal in this embodiment, it is possible to form it from a resin.

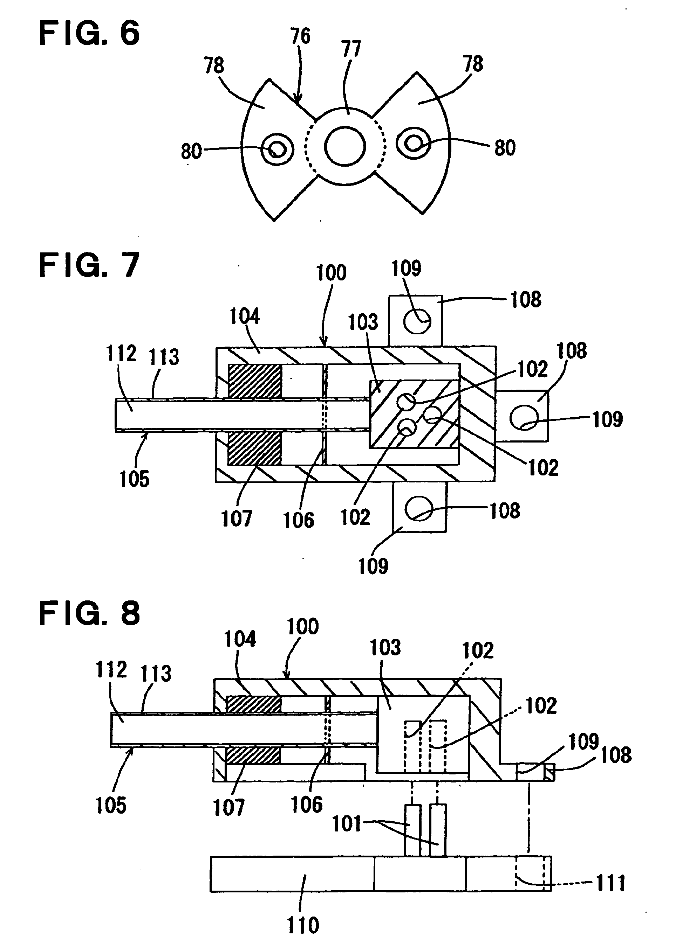

As depicted in Fig. 4, collar 76 comprises a cylindrical portion 77 and a flange 78 formed at an end portion of the cylindrical portion 77. Flange 78 projects in the radial direction of cylindrical portion 77, and in this embodiment, the flange 78 is formed over the entire circumference of the cylindrical portion 77 as shown in Fig. 5. Where, it is possible to form flange 78 partially in the circumferential direction of cylindrical portion 77. For example, as depicted in Fig. 6, if flange 78 is formed as a structure with least two parts or more in the circumferential direction of cylindrical portion 77, the whole of collar 78 can be fixed to casing 74.

A plurality of screw holes 80 are provided to flange 78 in the circumferential direction for being screwed with screws 79 (in Fig. 4, flat countersunk head screws). Further, a fixing portion 81, to which flange 78 is fixed, is provided on the inner surface of casing 74. Where, fixing portion 81 may be formed integrally with casing 74. Screw holes 82 are provided on fixing portion 81 in correspondence with screw holes 80 of flange 78.

In this embodiment, since collar 76 is provided in cable 71 at at least a position corresponding to the position of sealing material 75, even in a case where cable 71 becomes high temperature and covering material 73 is softened, or even in a case where cable 71 is disposed in a vent fashion, the contact pressure or the contact area between cable 71 and sealing material 75 can be always maintained to be constant. Therefore, a good sealing performance in casing 74 can be ensured.

Further, in this embodiment, since the radially projecting flange 78 is provided at the end portion of cylindrical portion 77 of collar 76 and the whole of collar 76 is fixed to casing 74 via the flange 78, a shift in position of collar 76, etc. can be surely prevented.

### Industrial Applications of the Invention

Although the present invention can be applied to an electric motor-driven compressor which merely has only an incorporated electric motor as its drive source, in particular, the present invention is suitable as a hybrid compressor which is suitable for a refrigeration cycle for vehicles, etc.

## Claims

1. An electric motor-driven compressor having a connector structure comprising a cable (60;71) for power supply in which a core wire (62;72) is covered with a covering material (68;73), a terminal connecting portion (58) to which said cable is connected and which has a terminal hole (57) into which an external terminal (51) for power supply to an electric motor (35) for driving a compression mechanism (2,3) incorporated in a compressor housing (17) is inserted, and which is structured to be attached to and detached from said external terminal (51), and a casing (59) covering said terminal connecting portion (58), **characterized in that** a collar (68;76) is provided between said core wire (62;72) and said covering material (63;73) of said cable at at least a position corresponding to a position of a sealing material provided at a cable inserting portion of said casing.

2. The electric motor-driven compressor according to claim 1, wherein a flange (78) radially projecting is provided to said collar (76) at an end portion of said collar.

3. The electric motor-driven compressor according to claim 2, wherein said flange (78) is fixed to said casing (74).

4. The electric motor-driven compressor according to claim 1, wherein said collar (68;76) made from a metal or a resin.

## Patentansprüche

1. Elektromotorbetriebener Kompressor, der
einen Verbinderaufbau hat, der
ein Kabel (60, 71) zur Stromversorgung, in dem ein Kerndraht (62, 72) mit einem Abdeckmaterial (63, 73) abgedeckt ist,
einen Anschlussverbindungsabschnitt (58), mit dem das Kabel verbunden ist und der ein Anschlussloch (57) hat, in das ein externer Anschluss (51) zur Stromversorgung für einen Elektromotor (35) zum Antreiben eines in einem Kompressorgehäuse (17) aufgenommenen Kompressionsmechanismus (2, 3) eingebracht wird, und der strukturiert ist, an dem externen Anschluss (51) angebracht und davon abgenommen zu werden, und
ein Gehäuse (59), das den Anschlussverbindungsabschnitt (58) abdeckt, aufweist,
**dadurch gekennzeichnet, dass** eine Manschette (68, 76) zwischen dem Kerndraht (62, 72) und dem Abdeckmaterial (63, 73) des Kabels an zumindest einer Position, die mit einer Position eines an einem Kabeleinbringabschnitt des Gehäuses vorgesehenen Dichtmaterials übereinstimmt, vorgesehen ist.

2. Elektromotorbetriebener Kompressor gemäß Anspruch 1, wobei ein radial vorstehender Flansch (78) an der Manschette (76) an einem Endabschnitt der Manschette vorgesehen ist.

3. Elektromotorbetriebener Kompressor gemäß Anspruch 2, wobei der Flansch (78) an dem Gehäuse (74) befestigt ist.

4. Elektromotorbetriebener Kompressor gemäß Anspruch 1, wobei die Manschette (68, 76) aus Metall oder Harz hergestellt ist.

## Revendications

1. Compresseur entrainé par un moteur électrique ayant une structure de connecteur comprenant un câble (60, 71) d'alimentation en puissance dans lequel un conducteur central (62, 72) est recouvert par un matériau de recouvrement (63, 73), une partie de connexion d'extrémité (58) à laquelle ce câble est relié et qui comporte un perçage d'extrémité (57) dans lequel est insérée une extrémité externe (51) permettant l'alimentation en puissance d'un moteur électrique (35) d'entrainement d'un mécanisme de compression (2, 3) incorporé dans un boitier de compresseur (17) et dont la structure permet sa fixation ou son extraction de l'extrémité externe (51), un capteur (59) recouvrant la partie de connexion d'extrémité (58),
**caractérisé en ce qu'**
une bague (68, 76) est montée entre le conducteur central (62, 72) et le matériau de recouvrement (63, 73) du câble dans au moins une position correspondant à la position d'un matériau de scellement prévu dans une partie d'insertion de câble du carter.

2. Compresseur entrainé par un moteur électrique conforme à la revendication 1, dans lequel une collerette (78) faisant saillie radialement est montée sur la bague (76) à une extrémité de cette bague.

3. Compresseur entrainé par un moteur électrique conforme à la revendication 2, dans lequel la collerette (78) est fixée au carter (74).

4. Compresseur entrainé par un moteur électrique conforme à la revendication 1, dans lequel la bague (68, 76) est réalisée en un métal ou une résine.
